# FASCICULE DE BREVET EUROPEEN

(11) **EP 1 914 099 B1**
(45) Date de publication et mention de la délivrance du brevet: **12.01.2011**
(21) Numéro de dépôt: 07301347.6
(22) Date de dépôt: 07.09.2007
(51) Int. Cl.: B60J 7/20, E05F 1/10, E05F 5/02

(54) **Dispositif d'ouverture d'un ouvrant de véhicule automobile**
Öffnungsvorrichtung für eine Klappe eines Kraftfahrzeugs
Device for opening a lid of an automobile

(30) Priorité: 16.10.2006 FR 0654298
(43) Date de publication de la demande: 23.04.2008
(73) Titulaire: Peugeot Citroën Automobiles SA, 78943 Vélizy-Villacoublay Cedex (FR)
(72) Inventeur: Papet, Gilles, 78370, PLAISIR (FR); Caux Crocquet, Fabien, 92600, ASNIERES SUR SEINE (FR); Palazzoli, Patrice, 78180, MONTIGNY LE BRETONNEUX (FR)

(56) Documents cités:
- EP-A- 0 808 982
- EP-A1- 0 074 880
- EP-A1- 0 334 253
- WO-A-03/080377
- WO-A-2005/032867
- DE-A1- 10 018 732
- DE-C1- 4 320 468
- DE-U1- 20 201 316
- GB-A- 464 270
- US-A- 4 165 122
- US-A1- 2004 075 294

## Description

L'invention concerne un dispositif d'ouverture d'un ouvrant de véhicule automobile, comprenant un équilibreur d'effort tel qu'un vérin incluant par exemple un ressort se comprimant ou se détendant lors de la fermeture de l'ouvrant, cet équilibreur d'effort ayant une extrémité dite fixe solidarisée à une partie fixe du véhicule et une extrémité dite mobile solidarisée l'ouvrant.

L'invention s'applique en particulier à un véhicule comprenant un ouvrant particulièrement pesant, comme par exemple un véhicule équipé d'un toit escamotable dans son coffre arrière, et d'un couvercle de coffre monté articulé sur la caisse du véhicule afin de permettre l'accessibilité au coffre.

Dans ce cas, l'ouvrant est maintenu par un jeu de bras mobiles rotatifs assurant son maintien et imposant sa trajectoire de fermeture et d'ouverture, et un ou plusieurs équilibreurs d'effort destinés à compenser les efforts à fournir, de manière à faciliter l'ouverture et la fermeture de cet ouvrant.

Un tel équilibreur d'effort est par exemple un vérin incluant un ressort fonctionnant en compression, et comprenant une extrémité fixe montée rotative sur une partie fixe du véhicule, et une extrémité mobile montée rotative sur l'ouvrant. Lorsque l'ouvrant est fermé, les équilibreurs d'efforts sont contraints à leur niveau maximal, et lorsque l'ouvrant est ouvert, ils sont détendus.

A l'utilisation, il s'avère que les efforts importants exercés par les équilibreurs d'efforts tendent à déformer les bras, et donc l'ouvrant. Cette déformation résulte en particulier des efforts importants qui sont appliqués par les équilibreurs aux éléments de tôlerie constituant l'ouvrant lorsque cet ouvrant est fermé, les efforts étant alors maximaux.

La déformation de l'ouvrant se traduit par des défauts d'alignement des éléments de serrure de l'ouvrant, ce qui peut rendre la fermeture de l'ouvrant impossible. Ces déformations se traduisent également par des défauts d'aspects correspondant à l'apparition de jeux et d'affleurements entre les bords de l'ouvrant et les bords du coffre.

Une manière de résoudre ce problème consiste à surdimensionner les bras du dispositif d'ouverture du coffre, de telle manière qu'ils puissent s'opposer sans déformation aux efforts des équilibreurs lorsque l'ouvrant est fermé.

Le défaut de cette solution réside dans le fait qu'elle résulte dans un dispositif d'ouverture très volumineux qui n'est pas forcément compatible avec le volume disponible dans le coffre du véhicule. Ceci est encore accentué par le fait que certains bras ont des formes courbes, en col de cygne, nécessitant par conséquent un surdimensionnement très important.

Il est aussi connu de EP0334253-A1 de disposer sur la structure du véhicule, une butée contre laquelle vient en appui une partie d'un vérin fournissant un effort d'aide à l'ouverture d'un ouvrant afin de transférer cet effort à la structure du véhicule lorsque l'ouvrant est en position de fermeture.

Ainsi, le but de l'invention est de proposer une solution permettant de limiter les déformations de l'ouvrant sans impliquer de surdimensionner les bras du dispositif d'ouverture.

A cet effet, l'invention a pour objet un dispositif d'ouverture d'un ouvrant de véhicule automobile, comprenant un équilibreur d'effort tel qu'un vérin incluant un ressort se comprimant ou se détendant lors de la fermeture de l'ouvrant, cet équilibreur d'effort ayant une extrémité dite fixe solidarisée à une partie fixe du véhicule et une extrémité dite mobile solidarisée à l'ouvrant, ce dispositif comprenant un galet rigidement solidaire de l'extrémité mobile de l'équilibreur d'effort, et une butée solidaire d'une partie fixe du véhicule et sur laquelle le galet vient en appui lorsque l'ouvrant est fermé, l'équilibreur exerçant alors un effort tendant à maintenir le galet en appui sur la butée.

L'invention concerne également un dispositif tel que défini ci-dessus, comprenant une platine rigidement solidaire de l'ouvrant, cette platine portant le galet et un point d'ancrage, tel qu'un axe, auquel est solidarisée l'extrémité mobile.

L'invention concerne également un dispositif tel que défini ci-dessus, dans lequel le galet est situé sensiblement dans le prolongement de l'équilibreur d'effort.

L'invention concerne également un dispositif tel que défini ci-dessus, dans lequel la butée comprend un chemin de roulement du galet incluant une portion rectiligne inclinée pour accueillir le galet lors de la fermeture du coffre.

L'invention concerne également un dispositif tel que défini ci-dessus, dans lequel le chemin de roulement comprend une portion en arc de cercle prolongeant la portion rectiligne.

L'invention concerne également un véhicule comprenant un compartiment fermé par un, ouvrant équipé d'un dispositif selon l'une des revendications précédentes.

L'ouvrant du compartiment du véhicule selon l'invention est par exemple un couvercle de coffre arrière.

L'invention sera maintenant décrite plus en détail, et en référence aux figures annexées.
La figure 1 est une représentation schématique latérale d'un premier mode de réalisation du dispositif selon l'invention ;
La figure 2 est une représentation en perspective latérale des éléments constitutifs du premier mode de réalisation du dispositif selon l'invention ;
La figure 3 est une vue de dessus des éléments de la figure 2 ;
La figure 4 est une première représentation schématique latérale montrant des déformations pouvant être évitées avec un deuxième mode de réalisation de l'invention ;
La figure 5 est une première représentation schématique latérale montrant d'autres déformations pouvant être évitées avec un deuxième mode de réalisation de l'invention ;
La figure 6 est une représentation schématique latérale du second mode de réalisation de l'invention.

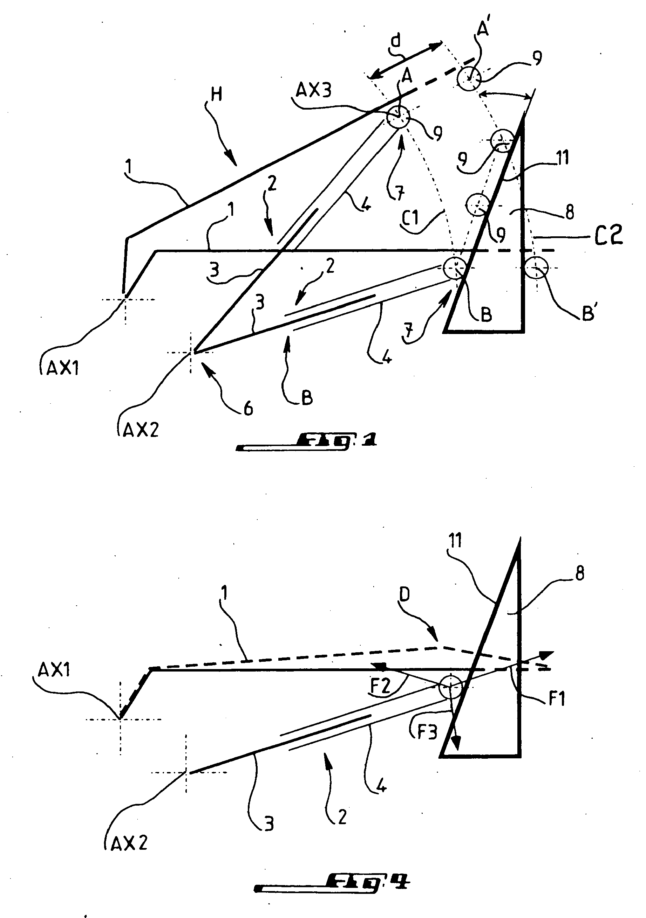

Dans la figure 1, on a représenté un dispositif d'ouverture d'un ouvrant de coffre arrière d'un véhicule automobile apte à être ouvert et fermé en pivotant autour d'un axe AX1 normal au plan de la figure.

Cet ouvrant est représenté symboliquement par un trait repéré par 1 et correspondant par exemple à un élément structurel de l'ouvrant, cet élément structurel est par exemple un support portant le couvercle de coffre.

Ce dispositif comprend également un équilibreur d'effort 2 se présentant sous forme d'un vérin comprenant une tige 3 coulissant dans un corps tubulaire 4 à l'encontre d'un ressort non représenté.

Ce vérin comprend une extrémité dite fixe, repérée par 6 et correspondant à une extrémité de la tige coulissante 3, cette extrémité est solidarisée à une partie fixe du véhicule en étant apte à pivoter autour d'un axe AX2 parallèle à l'axe AX1.

Il comprend également une extrémité dite mobile, repérée par 7 et correspondant à une extrémité du corps 6, qui est fixée à l'élément 1 en étant apte à pivoter par rapport à cet élément 1, autour d'un axe AX3 parallèle aux axes AX1 et AX2.

Le ressort non représenté de l'équilibreur d'effort tend continûment à éloigner les extrémités 6 et 7 l'une de l'autre, ce qui lui permet d'assister l'ouverture de l'ouvrant en développant un effort tendant à faire monter ce dernier pour lui faire atteindre la position haute repérée par H sur la figure 1.

Lorsque l'ouvrant est en position haute repérée par H, un appui sur le couvercle de coffre, à l'encontre du ressort, est suffisant pour fermer celui-ci, c'est-à-dire pour le ramener dans la position basse ou fermée repérée par B dans la figure 1.

Le ressort est dimensionné pour délivrer un effort qui est un compromis pour être suffisant afin de faciliter l'ouverture mais pas trop élevé pour permettre la fermeture du coffre.

Durant l'ouverture et la fermeture du coffre, l'extrémité mobile ou tête mobile 7 du vérin suit une trajectoire qui est sensiblement en arc d'un cercle C1 centré sur l'axe AX1, en occupant une position repérée par A lorsque l'ouvrant est ouvert et en occupent une position repérée par B lorsque l'ouvrant est fermé.

Toutefois, l'équilibreur d'effort 2 exerce un effort sur l'élément 1 tel, qu'il tend à le déformer. Cette déformation s'établit principalement durant les opérations de fermeture du coffre et lorsque l'ouvrant est fermé, l'effort exercé par l'équilibreur étant alors maximal. Lorsque l'ouvrant est fermé, le ressort non représenté est à son plus haut niveau de compression.

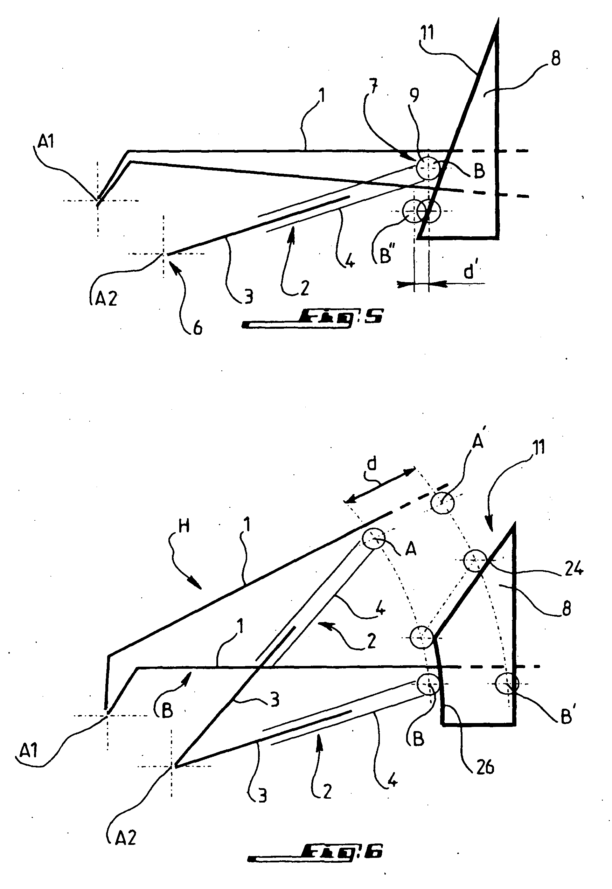

Cette déformation se traduit par exemple par le fait qu'en position d'ouverture de l'ouvrant, l'extrémité mobile 7 s'éloigne de l'axe A, d'une distance notée d aux figures 1 et 6. Lorsque l'ouvrant est ainsi déformé, la trajectoire de l'extrémité 7 est un arc de cercle C2 de plus grand diamètre, l'extrémité mobile 7 occupant alors la position A' lorsque l'ouvrant est ouvert et la position B' lorsqu'il est fermé.

La position B' étant décalée par rapport à la position de référence B, il s'ensuit que les organes de verrouillage non représentés ne sont plus précisément en vis-à-vis les uns des autres, de sorte que la fermeture complète se fait en force, voire qu'elle est impossible.

Selon l'invention, le dispositif d'ouverture est pourvu d'une butée fixe c'est-à-dire rigidement solidarisée à une partie fixe du véhicule, et repérée par 8. Cette butée 8 est destinée à recevoir un galet 9 qui est solidaire de l'extrémité 7 pour s'opposer à l'effort développé par l'équilibreur lorsque l'ouvrant est fermé.

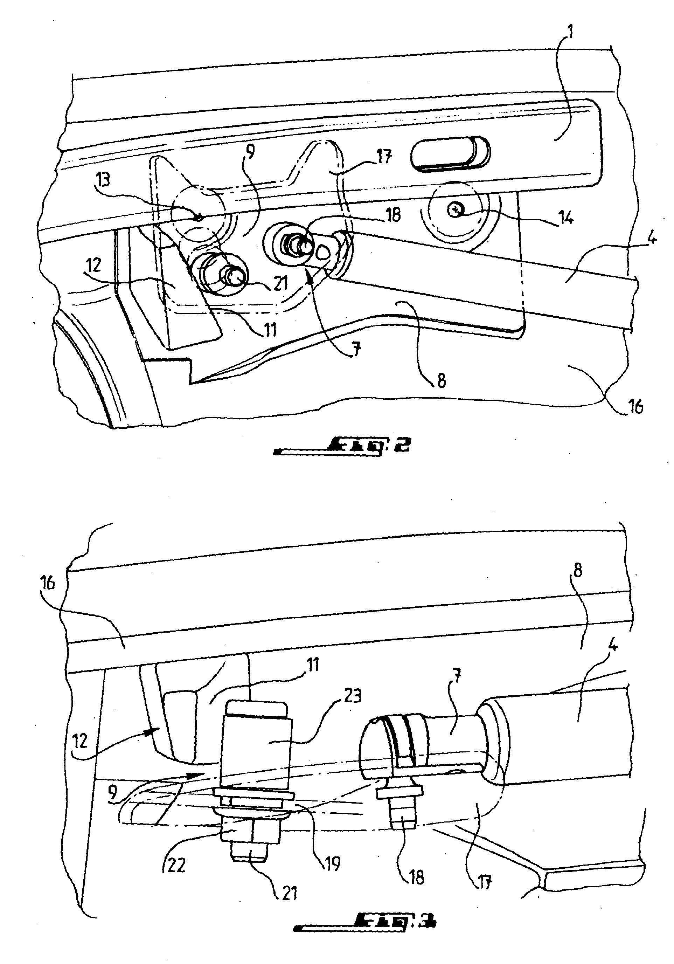

Dans la représentation de la figure 1, qui est symbolique, le galet 9 est confondu avec l'extrémité 7 de l'équilibreur, mais ce galet est porté par une embase rigidement solidaire de l'ouvrant et à laquelle est fixée l'extrémité 7 de l'équilibreur, comme c'est le cas dans l'exemple des figures 2 et 3.

En se reportant à nouveau à la figure 1, la butée 8 comprend plus particulièrement un chemin de roulement 11, ou came, qui est ici rectiligne et incliné en étant orienté et positionné de manière à accueillir le galet 9 en fin de fermeture du coffre pour qu'il se place dans la position normale repérée par B lorsque l'ouvrant est fermé.

Ainsi, dans le cas où l'effort exercé par l'équilibreur tend à éloigner l'extrémité mobile 7 de la distance d, lors de la fermeture du coffre, le galet vient en appui sur le chemin de roulement 11 et vient nécessairement se placer dans la position dite normale repérée par B, de sorte que les éléments de verrouillage du coffre sont en vis-à-vis les uns des autres pour permettre sa fermeture complète normale.

Dans les figures 2 et 3, on a représenté de manière plus structurelle les éléments de l'invention. La butée 9 a une forme générale de profilé à section transversale en équerre et présentant à l'une de ses extrémité une protubérance 12 orientée vers l'intérieur de l'équerre. Cette protubérance a une forme de cale délimitant une surface plane et oblique qui est le chemin de roulement 11.

Cette butée 8 comprend encore deux trous de fixation 13 et 14 réalisés dans l'un des flancs du profilé en équerre qu'elle constitue, pour fixer cette butée à un élément de structure ou de carrosserie situé sur une face interne d'un flanc du coffre, cet élément étant repéré par 16 dans la figure 2.

Dans l'exemple des figures 2 et 3, l'extrémité 7 et le galet 9 sont portés par une embase 17 qui est rigidement fixée à l'élément 1 de l'ouvrant. Cette embase 17 a une forme générale de flasque orienté dans un plan vertical, portant un axe fixe 18 sur lequel est engagée la tête mobile 7 de l'équilibreur, et elle porte également le galet 9.

Plus particulièrement, elle comprend un trou oblong 19 dans lequel est engagé un axe 21 portant le galet, cet axe ayant une extrémité filetée sur laquelle est engagé un écrou de serrage 22, et une autre extrémité, opposée à la première, portant la roue 23 du galet 9.

Le trou oblong 19 s'étend parallèlement à un axe longitudinal du véhicule, de sorte qu'il est possible d'ajuster la position longitudinale du galet afin d'ajuster au mieux sa position lorsque l'ouvrant est fermé.

Comme le montre en particulier la figure 3, l'embase 17 est montée de telle manière qu'elle couvre une partie du profilé formant la butée avec la protubérance 12 en forme de cale portant le chemin de roulement 11.

Les parties des axes 18 et 21 sur lesquelles sont engagés respectivement la tête mobile 7 et la roue 23 sont ainsi orientés latéralement vers l'extérieur du véhicule, de sorte que lorsque l'ouvrant est fermé, la tête mobile 7 et la roue 23 sont situées entre l'embase 17 et la butée 8.

Avantageusement, le profil du chemin de roulement 11 est optimisé pour limiter le plus possible les déformations du coffre. En effet, comme représenté en figure 4, le choix d'un chemin 11 rectiligne oblique conduit à une situation dans laquelle lorsque l'ouvrant est fermé, le galet est soumis à un effort noté F1 de la part de l'équilibreur, et à un effort F2 qui est la réaction du chemin 11.

Dans cette situation, la somme de ces efforts F1 et F2 est compensée par l'effort F3 appliqué par l'ouvrant au galet 9, cet effort F3 pouvant donner lieu à une déformation repérée par D et correspondant à un pliage du coffre. En d'autres termes, une fois le coffre fermé, le galet étant en appui sur un chemin 11 qui est oblique, ce galet exerce en réaction un effort dirigé verticalement vers le haut sur l'ouvrant.

Dans le cas d'un chemin 11 rectiligne et oblique, tel que représenté en figure 5, en cas d'enfoncement de l'ouvrant au delà de la position de référence B lors de sa fermeture, l'ouvrant tend à se déformer : le galet 9 atteint une autre position, notée B", dans laquelle il s'est rapproché de l'axe A1 d'une valeur d', ce qui est également à éviter.

Pour éviter ces inconvénients, le chemin de roulement 11 est avantageusement prévu avec une première portion 24 rectiligne et oblique pour accueillir le galet 9 lors de la descente de l'ouvrant, suivie d'une seconde portion 26, représentée en figure 6, ayant une forme générale d'arc de cercle centré sur l'axe A2 correspondant à l'extrémité fixe de l'équilibreur 2.

De cette manière, lorsque le coffre est fermé, le galet 9 est uniquement soumis à l'effort exercé par l'extrémité mobile 9 de l'équilibreur 2 et à la réaction du chemin de roulement qui s'étend sensiblement selon la même orientation que l'effort exercé par l'extrémité mobile, à savoir la direction générale de l'actionneur.

Ainsi, le choix d'une portion 26 en arc de cercle du chemin de roulement dans la zone d'appui du galet 9 lorsque l'ouvrant est fermé permet de minimiser encore les déformations pouvant être subies par l'ouvrant lorsqu'il est fermé.

De manière analogue, le choix d'une portion 26 de chemin de roulement en arc de cercle permet d'éviter un déplacement, et donc une déformation du coffre, lorsque l'ouvrant est enfoncé au-delà de sa position normale de fermeture.

De façon générale, le chemin de roulement 11 est dimensionné de manière à prendre en compte les dispersions des éléments entre eux et la valeur de déformation du mécanisme qui peut être déterminée par simulation sur un modèle de type éléments finis.

L'invention apporte une solution simple consistant à reconformer géométriquement l'ouvrant lorsqu'il est fermé. Ceci est obtenu en utilisant la manoeuvre du coffre pour faire débattre la tête mobile 7 de l'équilibreur 2 contre la butée.

L'intégration de l'invention est également simple. Il s'agit dans un premier temps de monter l'ouvrant sans les équilibreurs, ainsi que la butée 8 et la platine 17 portant le galet 9, l'écrou 22 de serrage n'étant alors pas complètement serré. Dans un second temps, l'ouvrant est fermé ce qui permet au galet de se positionner précisément par rapport au trou oblong 19. L'ouvrant est ensuite ouvert pour serrer l'écrou 22 et pour monter les équilibreurs tels que l'équilibreur 2.

En variante, il est aussi possible de monter l'axe 21 du galet lorsque l'ouvrant est fermé en ayant été préalablement monté avec les équilibreurs. Dans ce cas, l'axe 21 est positionné de manière à être en appui sur le chemin de roulement 11, et son écrou 22 est serré, l'ouvrant étant alors dans un état déformé. Dans un second temps, l'ouvrant est ouvert, et la roue 23 du galet est montée sur son axe 21. Dans cette variante, il est à noter que la roue 23 a une épaisseur correspondant à la valeur de déformation du mécanisme sous l'effet de la poussée des équilibreurs.

## Revendications

1. Dispositif d'ouverture d'un ouvrant de véhicule automobile, comprenant un équilibreur d'effort (2) tel qu'un vérin incluant un ressort se comprimant ou se détendant lors de la fermeture de l'ouvrant (1), cet équilibreur d'effort (2) ayant une extrémité dite fixe (6) solidarisée à une partie fixe du véhicule et une extrémité dite mobile (7) solidarisée à l'ouvrant, ce dispositif comprenant un galet (9) rigidement solidaire de l'extrémité mobile (7) de l'équilibreur d'effort (2), et une butée (8) solidaire d'une partie fixe du véhicule et sur laquelle le galet (9) vient en appui lorsque l'ouvrant (1) est fermé, l'équilibreur (2) exerçant alors un effort tendant à maintenir le galet (9) en appui sur la butée (8), ce dispositif comprenant une platine (17) rigidement solidaire de l'ouvrant (1), cette platine (17) portant le galet (9) et un point d'ancrage, tel qu'un axe (18), auquel est solidarisée l'extrémité mobile (7).

2. Dispositif selon la revendication 1, dans lequel le galet (9) est situé sensiblement dans le prolongement de l'équilibreur d'effort (2).

3. Dispositif selon la revendication 1 ou 2, dans lequel la butée (8) comprend un chemin de roulement (11) du galet (9) incluant une portion rectiligne (24) inclinée pour accueillir le galet (9) lors de la fermeture du coffre.

4. Dispositif selon la revendication 3, dans lequel le chemin de roulement (11) comprend une portion en arc de cercle (26) prolongeant la portion rectiligne (24).

5. Dispositif selon l'une quelconque des revendications 1 à 4, dans lequel la platine (17) comprend un trou oblong (19) dans lequel est engagé un axe (21) portant une roue (23) du galet (9).

6. Dispositif selon la revendication 5, dans lequel le trou oblong (19) s'étend parallèlement à un axe longitudinal du véhicule afin de rendre possible un ajustement de la position longitudinale du galet (9) pour régler sa position lorsque l'ouvrant est fermé.

7. Véhicule comprenant un compartiment fermé par un ouvrant équipé d'un dispositif selon l'une des revendications précédentes.

8. Véhicule selon la revendication 7, **caractérisé en ce que** l'ouvrant est un couvercle de coffre arrière.

## Claims

1. Opening device of an opening panel of a motor vehicle, comprising a force balancer (2) such as a jack including a spring compressing or extending on closure of the opening panel (1), this force balancer (2) having one end, designated the fixed end (6) integrated to a fixed part of the vehicle, and an end, designated the movable end (7), integrated to the opening panel, this device comprising a runner (9) rigidly integral with the movable end (7) of the force balancer (2), and an abutment (8) integral with a fixed part of the vehicle and on which the runner (9) comes to rest when the opening panel (1) is closed, the balancer (2) then exerting a force tending to keep the runner (9) resting on the abutment (8), this device comprising a plate (17) rigidly integral with the opening panel (1), this plate (17) carrying a runner (9) and an anchoring point, such as an axis (18), to which the movable end (7) is integrated.

2. Device according to Claim 1, in which the runner (9) is situated substantially in the extension of the force balancer (2).

3. Device according to Claim 1 or 2, in which the abutment (8) comprises a race (11) of the runner (9) including an inclined rectilinear portion (24) to receive the runner (9) on closure of the boot.

4. Device according to Claim 3, in which the race (11) comprises a portion (26) in the form of a circular arc, extending the rectilinear portion (24).

5. Device according to any one of Claims 1 to 4, in which the plate (17) comprises an oblong hole (19) in which there is engaged an axis (21) carrying a wheel (23) of the runner (9).

6. Device according to Claim 5, in which the oblong hole (19) extends parallel to a longitudinal axis of the vehicle, so as to make possible an adjustment of the longitudinal position of the runner (9) to regulate its position when the opening panel is closed.

7. Vehicle comprising a compartment closed by an opening panel equipped with a device according to one of the preceding claims.

8. Vehicle according to Claim 7, **characterized in that** the opening panel is a rear boot lid.

## Patentansprüche

1. Öffnungsvorrichtung einer Kraftfahrzeugtür, die einen Kraftausgleicher (2), wie zum Beispiel einen Zylinder aufweist, der eine Feder enthält, die sich beim Schließen der Tür (1) komprimiert oder streckt, wobei dieser Kraftausgleicher (2) ein stationär genanntes Ende (6) hat, das mit einem stationären Teil des Fahrzeugs fest verbunden ist, und ein beweglich genanntes Ende (7), das mit der Tür fest verbunden ist, wobei diese Vorrichtung eine Walze (9) aufweist, die starr fest mit dem beweglichen Ende (7) des Kraftausgleichers (2) verbunden ist, und einen Anschlag (8), der mit einem stationären Teil des Fahrzeugs fest verbunden ist und auf dem die Walze (9) zum Aufliegen kommt, wenn die Tür (1) geschlossen wird, wobei der Ausgleicher (2) eine Kraft ausübt, die dazu tendiert, die Walze (9) in Auflage auf dem Anschlag (8) zu halten, wobei diese Vorrichtung eine Platte (17) aufweist, die starr fest mit der Tür (1) verbunden ist, wobei diese Platte (17) die Walze (9) und einen Verankerungspunkt, wie zum Beispiel eine Achse (18), mit der das bewegliche Ende (7) fest verbunden ist, trägt.

2. Vorrichtung nach Anspruch 1, bei der die Walze (9) im Wesentlichen in der Verlängerung des Kraftausgleichers (2) liegt.

3. Vorrichtung nach Anspruch 1 oder 2, bei der der Anschlag (8) eine Rolloberfläche (11) der Walze (9) aufweist, die einen geradlinigen Abschnitt (24) umfasst, der geneigt ist, um die Walze (9) beim Schließen des Kofferraums aufzunehmen.

4. Vorrichtung nach Anspruch 3, bei der die Rolloberfläche (11) einen kreisbogenförmigen Abschnitt (26) aufweist, der den geradlinigen Abschnitt (24) verlängert.

5. Vorrichtung nach einem der Ansprüche 1 bis 4, bei dem die Platte (17) ein Langloch (19) aufweist, in das eine Achse (21) eingeführt ist, die ein Rad (23) der Walze (9) trägt.

6. Vorrichtung nach Anspruch 5, bei der sich das Langloch (19) parallel zu einer Längsachse des Fahrzeugs erstreckt, um ein Justieren der Längsposition der Walze (9) zu ermöglichen, um ihre Position einzustellen, wenn die Tür geschlossen ist.

7. Fahrzeug, das ein Fach, das durch eine Tür, die mit einer Vorrichtung nach einem der vorhergehenden Ansprüche geschlossen wird, aufweist.

8. Fahrzeug nach Anspruch 7, **dadurch gekennzeichnet, dass** die Tür eine Heckkofferraumtür ist.
